# DEMANDE DE BREVET EUROPEEN

(11) **EP 4 830 511 A1**
(43) Date de publication de la demande: **28.10.2026**
(21) Numéro de dépôt: 26170736.8
(22) Date de dépôt: 03.04.2026
(51) Int. Cl.: A01G 17/06, F16B 2/24

(54) **DISPOSITIF DE MAINTIEN ET DE POSITIONNEMENT D'UN ACCESSOIRE DE CULTURE SUR UN PIQUET**

(30) Priorité: 23.04.2025 FR 2504291; 03.07.2025 FR 2507530
(71) Demandeur: Texinov Tech, 38110 Saint Didier de la Tour (FR); Deltaval, 69006 Lyon (FR)
(72) Inventeur: THIBAULT, Christian, 41250 MONT PRES CHAMBORD (FR); MOINEREAU, Francis, 69004 LYON (FR); TANKERE, Jacques, 01800 MEXIMIEUX (FR)
(74) Mandataire: Ipsilon

(57) **Abrégé**

Ce dispositif de maintien et de positionnement sur un piquet (1), pour la culture d'une végétation, d'un filet de protection ou de toute autre accessoire de culture de type bâche, film, tube ou tuyau d'irrigation, ou de dispositif de traitement ou de répulsif contre les insectes, comprend un premier élément (2) de fixation dudit dispositif sur le piquet (1).

Cet élément (2) est constitué d'un fil métallique cambré unique, définissant au moins un quadrilatère, typiquement en forme de trapèze ou de rectangle, dont l'un des côtés n'est pas clos, et dont les deux côtés divergents depuis le côté non clos (5) confèrent une capacité de déformation audit premier élément (2), et dont les deux extrémités libres (17, 18, 19) du fil constitutif dudit élément sont destinées à recevoir le filet de protection et/ou un accessoire de culture, ledit quadrilatère étant situé contre la face postérieure du piquet (1).

## Description

### DOMAINE DE L'INVENTION

La présente invention concerne le domaine des cultures végétales, plus particulièrement maraîchères, arboricoles et viticoles. Elle vise plus spécifiquement un dispositif apte à positionner et à maintenir sur un piquet, notamment les piquets de vigne, un filet de protection, typiquement contre la grêle, ou tout autre élément en lien avec la protection voire l'irrigation de telles cultures.

### ETAT ANTERIEUR DE LA TECHNIQUE

Les filets de protection des cultures contre la grêle et/ou les pluies d'orage, sont connus depuis de nombreuses années. Ces filets peuvent également avoir vocation de protéger les cultures contre le vent, le gel, voire contre les oiseaux et les nuisibles (notamment les insectes), afin de favoriser la croissance desdites cultures.

Traditionnellement, ces filets ou bâches de protection sont montés sur des piquets positionnés en rangée, qu'il s'agisse de vignes, ou d'arbres, permettant d'être déployés lorsque le besoin se fait sentir, ou au contraire repliés après usage.

Il est également connu la mise en œuvre de films plastiques pour limiter voire éviter les dégâts susceptibles d'être occasionnés par la pluie (par exemple pour les cerises ou les cultures de fruits rouges), ou diminuer les traitements antifongiques lors de saisons très humides pour lutter contre le mildiou ou l'oïdium par exemple.

Pour autant, le recours à ces traitements antifongiques, même s'il y est encore largement fait appel, a tendance à être réduit en raison des impacts écologiques, d'où l'intérêt accru de ces films ou filets de protection.

Si l'efficacité de tels filets, bâches, films plastiques ou voiles n'est plus à démontrer, en revanche, leur mise en œuvre (fixation, déploiement, reploiement) demeure toujours relativement complexe et chronophage.

En effet, ces filets et autres accessoires sont le plus souvent accrochés sur les piquets au moyen de crochets, mais également d'écarteurs, notamment pour les vignes, afin de définir le volume nécessaire à la croissance de la végétation de la culture et en l'espèce de la vigne considérée.

La mise en place de ces crochets, fixés de manière définitive (par vis ou clous) ou éphémère au niveau desdits piquets, est longue et fastidieuse, puisqu'aussi bien il y a lieu de fixer les crochets en question sur chacun des piquets, distants en moyenne de 4 à 6 m et au niveau de chacun des rangs de la culture considérée.

Par ailleurs, une autre problématique réside dans la multiplicité des piquets mis en œuvre à ce jour, qu'il s'agisse de piquets en bois, ou en métal, dont la section peut être variée, typiquement une section circulaire, carrée, rectangulaire, voire plus complexe (notamment s'agissant des piquets métalliques issus de filières). Cette multiplicité des piquets aujourd'hui disponibles engendre une multiplicité corrélative des crochets à mettre en œuvre, qui doivent dès lors avoir des dimensions et des profils adaptés à chacun des types de piquet. Ce faisant, il s'avère nécessaire de disposer de stocks importants susceptible d'engendrer des manques de disponibilité, et donc susceptible d'induire, en cas de rupture de stock, le report de la mise en place de tels filets au cycle de saison suivant et son corollaire, la destruction totale ou partielle de la culture en question en cas de non-mise en place d'un tel filet ou bâche de protection.

### DESCRIPTION SOMMAIRE DE L'INVENTION

L'objectif de la présente invention est, d'une part, de simplifier la mise en place de tels dispositifs de maintien et de positionnement de filets sur un piquet, au niveau de chacun desdits piquets, et d'autre part, de standardiser ces dits dispositifs de telle sorte qu'ils soient adaptables à tous types de piquet, quelles que soient sa section et ses dimensions.

A cet effet, l'invention vise un dispositif de maintien et de positionnement sur un piquet, pour la culture d'une végétation, d'un filet de protection ou de toute autre accessoire de culture de type bâche, film, tube ou tuyau d'irrigation, ou de dispositif de traitement ou de répulsif contre les insectes. Ce dispositif comprend un premier élément de fixation dudit dispositif sur le piquet.

Selon l'invention, ce premier élément est constitué d'un fil métallique cambré unique, définissant au moins un quadrilatère, typiquement en forme de trapèze ou de rectangle, dont l'un des côtés n'est pas clos, et dont les deux côtés divergents depuis le côté non clos confèrent une capacité de déformation audit premier élément, et donc corollairement d'adaptation aux dimensions des piquets sur lesquels il a vocation à être fixé, et dont les deux extrémités libres du fil constitutif sont destinées à recevoir le filet de protection et/ou un accessoire de culture, ledit quadrilatère étant situé contre la face postérieure du piquet.

Ce faisant, en raison de ce quadrilatère qui vient se plaquer contre le piquet, et contrairement à l'art antérieur, ne vient pas épouser la forme, et notamment la section dudit piquet, on dispose d'une élasticité suffisante pour permettre l'adaptation du dispositif de l'invention à n'importe quel type de profil de piquet tout en disposant d'une force de fixation suffisante.

Selon un mode de réalisation avantageux de l'invention, le dispositif comprend en outre un second élément, également constitué d'un fil métallique cambré unique, ce second élément, dit étrier de serrage, coopérant avec ledit premier élément aux fins d'optimiser le verrouillage dudit premier élément sur le piquet.

Selon ce mode de réalisation de l'invention, le fil constitutif de l'étrier de serrage comprend trois plans :
- un premier plan définissant au moins deux renflements symétriques l'un de l'autre, destinés à coopérer avec ledit premier élément afin d'assurer le verrouillage de ce dernier sur le piquet ; et
- un second et un troisième plans, sécants avec ledit premier plan, et comportant les deux extrémités libres du fil constitutif de l'étrier de serrage, lesdites extrémités étant destinées à enserrer le piquet.

En d'autres termes, et selon ce mode de réalisation de l'invention, cette dernière consiste à mettre en œuvre et à utiliser l'effet ressort inhérent au matériau constitutif des éléments (premier et second éléments), et ainsi permettre de disposer de réserves d'extension, typiquement d'au moins 15 %, et susceptibles d'atteindre 80 % voire 100 % dans deux directions au moins, de telle sorte à permettre l'adaptation dudit dispositif à la circonférence et la forme du piquet, et à mettre en œuvre une clé de serrage (étrier de serrage) pour verrouiller, après extension et resserrement du premier élément au niveau du piquet, à la hauteur souhaitée du piquet.

Typiquement, en sélectionnant la section des fils constitutifs des premier et second éléments d'une part, le matériau constitutif desdits fils d'autre part, et enfin la forme conférée au fil, il est possible de disposer de sections dudit dispositif typiquement selon des rectangles de 30x30 millimètres, susceptibles d'atteindre 65x45 millimètres.

Par « fil métallique cambré », on entend un fil métallique ayant subi plusieurs opérations de cambrage/cintrage afin de lui conférer une forme particulière, et corollairement des propriétés de déformation et d'élasticité, fonction en outre de l'état métallurgique dudit fil, et de l'éventuel traitement thermique qui lui est associé.

Selon une variante de l'invention, ledit premier élément ne comporte pas un, mais trois quadrilatères, typiquement en forme de trapèze, dont chacun d'entre eux présente un côté non clos, lesdits quadrilatères s'étendant selon trois plans distincts sensiblement perpendiculaires deux à deux.

En raison de la mise en œuvre de tels quadrilatères non clos, et par exemple de forme trapézoïdale, il est possible de définir une élasticité au niveau de chacun desdits quadrilatères, et donc corollairement d'optimiser l'adaptation du dispositif de l'invention à toute section de piquets.

Selon l'invention, il peut être souhaitable d'optimiser davantage la fixation effective du premier élément sur le piquet. A cet effet, le second élément ou étrier de serrage, là encore constitué d'un fil métallique cambré unique, définit essentiellement deux plans sécants l'un par rapport à l'autre :
- un plan intermédiaire, ayant vocation à s'étendre sensiblement parallèlement au piquet de vigne lorsqu'il est en place et coopère avec ledit premier élément ;
- un plan terminal, constitué par la boucle du fil unique constitutif dudit étrier de serrage, et orienté en l'absence de contrainte, c'est-à-dire lorsqu'il ne coopère pas avec ledit premier élément, selon un angle compris entre 20 et 40 degrés par rapport audit plan intermédiaire.

Selon ce mode de réalisation, les brins du fil unique reliant les deux plans ainsi définis l'un à l'autre décrivent chacun un renflement, symétrique l'un de l'autre, et destinés à coopérer avec ledit premier élément au niveau de zones de jonction entre les trois quadrilatères, notamment de forme trapézoïdale dudit premier élément, ou au niveau de zones de jonction entre ledit au moins un quadrilatère et la prolongation du fil unique constitutif dudit premier élément, définissant par exemple un réceptacle d'un accessoire de culture ou une zone de réception d'un câble de fixation d'un filet de protection.

Par ailleurs, les extrémités libres du fil unique constitutif dudit second élément ou étrier de serrage sont recourbées, de telle sorte à venir coopérer avec l'un des angles définis par le quadrilatère intermédiaire ou médian dudit premier élément. Alternativement, ces extrémités libres peuvent venir coopérer avec le piquet lui-même pour assurer le serrage et le blocage.

Selon une variante de l'invention, les extrémités libres dudit premier élément sont susceptibles de définir un magasin de stockage du filet, de la bâche, ou d'un voile, typiquement plastique, magasin au niveau duquel ledit filet, bâche, ou voile est susceptible d'être replié sous forme de rouleau.

Selon une variante de ce mode de réalisation, le fil cambré constitutif dudit premier élément peut définir une boucle faiblement ouverte positionnée entre lesdites extrémités libres définissant par exemple le magasin de stockage et la prolongation du côté non clos dudit au moins un quadrilatère. Cette boucle faiblement ouverte a vocation à bloquer l'un des câbles ou fils de fixation du filet de protection lors de la pose dudit filet, évitant tout décrochage lors des différentes manipulations de relevage et de récolte. L'écartement de l'ouverture de cette boucle faiblement ouverte est réduit et limité à quelques millimètres, typiquement 2 à 6 millimètres, pour permettre l'introduction du câble de fixation du filet et pour éviter que ledit câble ne ressorte de ce logement de manière intempestive.

Selon une variante, ces mêmes extrémités libres dudit premier élément sont susceptibles de définir un réceptacle d'un fil de tension et de fixation du filet, ce fil s'étendant parallèlement au rang de culture à protéger.

Selon une autre caractéristique de l'invention, les extrémités libres dudit premier élément sont susceptibles de faire fonction d'écarteur, plus particulièrement destiné aux vignes, le dispositif de l'invention étant alors positionné en zone inférieure des piquets.

Selon une autre variante de l'invention, ledit premier élément comprend un quadrilatère, en l'espèce en forme de rectangle, dont les côtés divergents depuis le côté non clos se prolongent par une série de zig-zags, permettant l'adaptation du dispositif de l'invention à toute section d'un piquet, les extrémités de ces zones en zig-zags se prolongeant alors par un magasin de stockage d'un filet, d'une bâche ou équivalent, ou d'écarteurs.

Selon l'invention, la section du fil métallique constitutif dudit premier élément, voire du second élément, est comprise entre 1 et 5 mm, avantageusement entre 2 et 4 mm.

### BREVE DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique en perspective du positionnement d'un crochet de fixation conforme à l'invention sur un piquet de vigne.
La figure 2 est une vue analogue à la figure 1 d'un autre mode de réalisation de l'invention.
La figure 3 est une représentation schématique en perspective d'un premier mode de réalisation dudit premier élément de l'invention.
La figure 4 est une vue schématique en perspective d'un second mode de réalisation dudit premier élément conforme à l'invention.
La figure 5 est un troisième mode de réalisation dudit premier élément de l'invention, tel qu'au demeurant fixé sur un piquet et illustré sur la figure 1.
La figure 6 est une vue schématique en perspective d'un quatrième mode de réalisation dudit premier élément de l'invention.
La figure 7 est une vue schématique en perspective d'un premier mode de réalisation dudit second élément ou étrier de serrage conforme à l'invention.
La figure 8 est une vue schématique d'un second mode de réalisation dudit étrier de serrage.
La figure 9 est une vue schématique d'un troisième mode de réalisation dudit étrier de serrage.
La figure 10 est une représentation schématique d'un troisième mode de réalisation de l'étrier de serrage.
La figure 11 est une représentation schématique illustrant la coopération de l'étrier de serrage de la figure 10 avec le premier élément de la figure 5 selon une vue de face.
La figure 12 est une vue analogue à la figure 11 selon la face opposée.
La figure 13 est une vue analogue aux figures 11 et 12 selon un autre angle de vue.

### DESCRIPTION DETAILLEE DE L'INVENTION

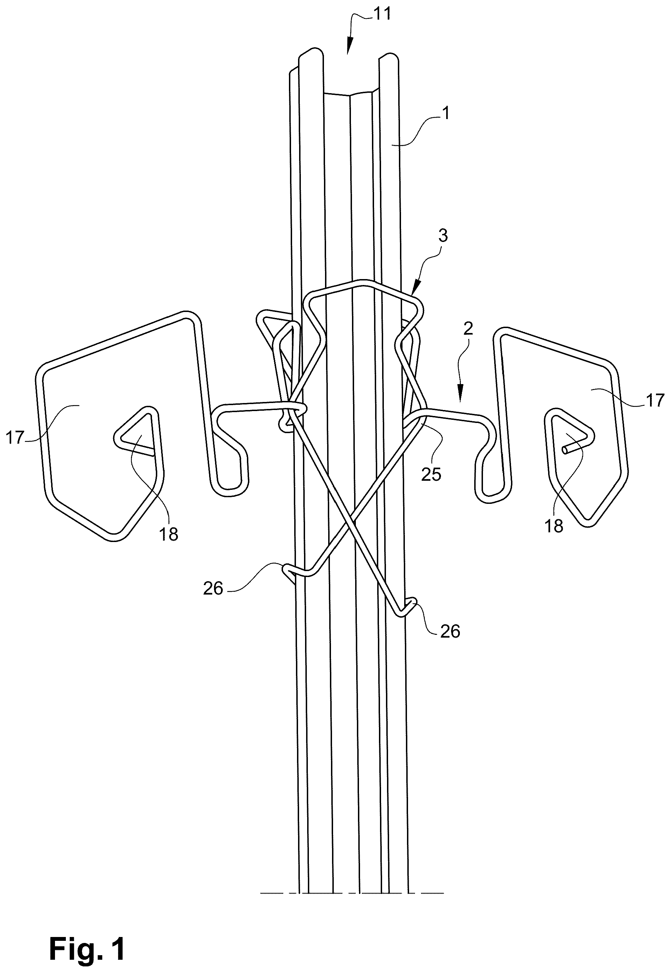

On a donc représenté sur la figure 1 un piquet, en l'espèce un piquet de vigne (1), sur lequel est fixé, de manière réversible, le dispositif de maintien et de positionnement destiné à recevoir par exemple un filet de protection, apte à protéger la vigne de la grêle ou de pluies violentes. Dans l'exemple décrit, ce piquet est de section transversale complexe et typiquement issu d'une filière métallique.

Au sein de cette figure, ont été représentés par la référence (2) ledit premier élément de fixation conforme à l'invention, et par la référence (3) l'étrier de serrage de l'élément (2) sur le piquet (1).

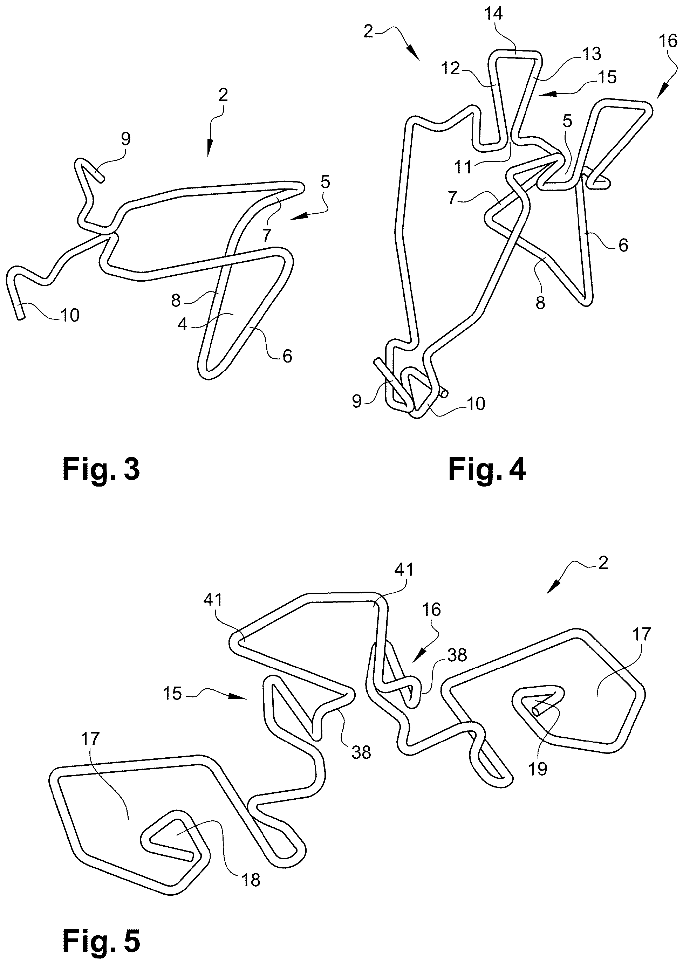

Cet élément (2) peut adopter plusieurs configurations possibles, notamment illustrées en lien avec les figures 3 à 6. Quelle que soit la configuration, cet élément est constitué d'un fil métallique unique, typiquement de section transversale voisine de 2 mm, ayant subi une ou plusieurs cambrures, éventuellement sous traitement thermique, afin de lui conférer déformabilité et élasticité et effet ressort.

Dans sa forme la plus simplifiée, illustrée au sein de la figure 3, ce premier élément (2) est configuré pour définir une boucle en forme de quadrilatère (4), en l'espèce en forme de trapèze, dont l'un des côtés (5) n'est pas clos. A partir de ce côté non clos (5), divergent deux côtés latéraux (6) et (7) qui se rejoignent au niveau du côté opposé (8) au côté non clos (5) du trapèze ainsi défini. Ce quadrilatère (5) est destiné à venir se positionner et prendre appui contre la face postérieure du piquet (1).

En d'autres termes, il est ainsi défini une boucle (6) (7) (8) dotée de propriétés de déformation, inhérentes au matériau constitutif du fil métallique d'une part, et également dotée d'un effet ressort, inhérent à la forme particulière de ce quadrilatère trapézoïdal et du matériau constitutif du fil et de son traitement.

Les extrémités libres (9) et (10) dudit fil ont vocation à recevoir par exemple un fil de tension, orienté sensiblement parallèlement au rang de vigne au niveau duquel les piquets concernés sont alignés, et permettant ultérieurement de fixer sur ce fil soit un filet de protection contre la grêle, le vent ou encore des tuyaux d'irrigation, voire même de transit d'un agent répulsif contre les insectes.

L'ouverture résultant de la boucle précitée (6) (7) (8) va permettre d'introduire ce dit premier élément par le dessus au niveau de l'extrémité supérieure (11) du piquet (1) et le faire glisser le long dudit piquet jusqu'à atteindre la hauteur souhaitée, ou alternativement, en raison des propriétés élastiques et du format de ce premier élément, d'être écarté, notamment au niveau du côté ouvert (5) du quadrilatère (6) (7) (8) pour permettre son insertion directe sur ledit piquet (1) à la hauteur souhaitée. L'effet ressort conféré au fil constitutif de ce premier élément permet d'assurer le positionnement précis de ce dernier sur le piquet de vigne, et son maintien en cette position nonobstant les contraintes générées par le filet positionné au niveau des extrémités (9, 10).

On a représenté, en lien avec la figure 4 un second mode de réalisation de ce dit premier élément. Le principe demeure identique, à savoir qu'il est constitutif d'un seul fil métallique, de section voisine de celle de l'élément de la figure 3.

Dans cette forme de réalisation, outre le quadrilatère (5) (6) (7) (8) décrit précédemment, dit quadrilatère intermédiaire ou de fond, ce quadrilatère se prolonge par deux autres quadrilatères, dits quadrilatères latéraux, là encore de forme trapézoïdale (15, 16), chacun muni d'un côté non clos (11), duquel émanent deux côtés (12) (13) reliés à un côté (14) opposé au côté ouvert (11). Ces deux quadrilatères trapézoïdaux (15) (16) s'étendent sensiblement dans des plans parallèles l'un à l'autre, ces dits plants étant sensiblement perpendiculaires au quadrilatère de fond (5) (6) (7) (8) tel qu'on peut bien l'observer sur la figure 4.

On confère ainsi à ce dit premier élément de fixation davantage de degré de liberté en termes d'expansion ou d'élasticité, en raison de ces deux quadrilatères supplémentaires (15) (16).

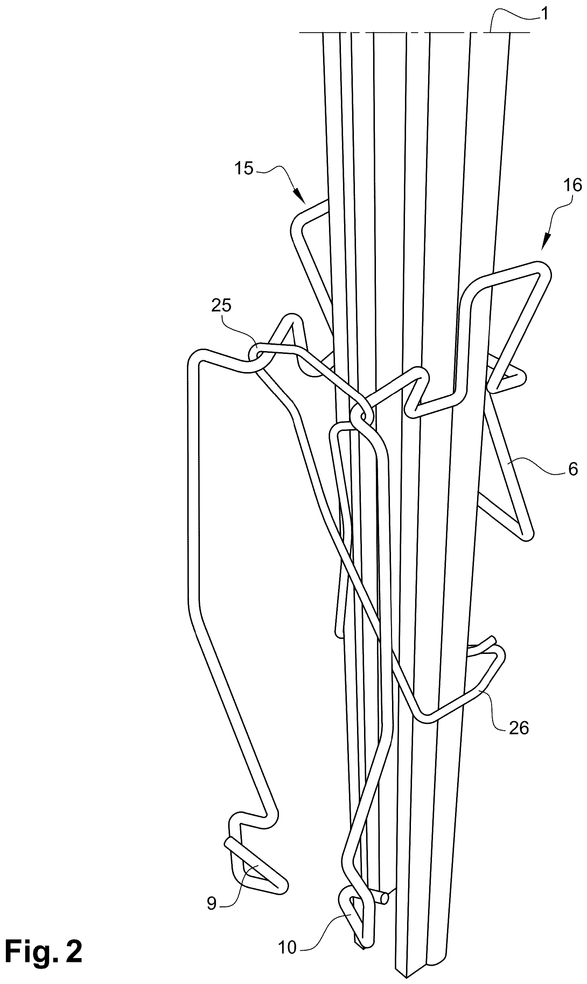

Typiquement, selon cette forme de réalisation, le quadrilatère de fond (5) (6) (7) (8) a vocation à être situé contre la face postérieure du piquet (1) et, corollairement, les deux autres quadrilatères (15) et (16) ont vocation à venir se positionner contre les faces latérales dudit piquet. Là encore, les extrémités libres (9) et (10) du fil constitutif de ce premier élément de fixation définissent des logements aptes à recevoir un fil, typiquement de tension d'un filet de protection. Plus spécifiquement, les deux branches munies de ces extrémités libres peuvent également servir d'écarteur. Ainsi donc, lesdites branches peuvent s'écarter selon une direction sensiblement perpendiculaire à la direction du rang de vigne considéré. Dans les faits, cet élément de fixation a vocation à être positionné en position inférieure sur un piquet, tel qu'illustré sur la figure 2.

Ainsi, et typiquement dans le cadre de la protection d'un rang de vigne, un piquet comprend en position supérieure (figure 1) un dispositif du type décrit en lien avec les figures 3 et 5, aux fins de fixation d'un filet de protection, et en position inférieure (figure 2), un dispositif du type décrit en lien avec la figure 4. Après écartement des branches et fixation en partie inférieure du filet en question à l'aide des extrémités libres (9, 10), le filet adopte une forme en triangle, s'évasant en direction du bas, permettant ainsi à la végétation de la vigne de se développer tout en étant protégée.

La figure 5 est sensiblement analogue à la figure 4, à la réserve près que les trois quadrilatères précités sont tous orientés en direction du haut, d'une part, et que d'autre part, les extrémités libres dudit fil constitutif définissent, tout d'abord, un magasin de stockage (17) d'un filet de protection, alors enroulé sur lui-même, et d'autre part, un logement (18) et (19) destiné à recevoir un fil de tension du filet alors stocké au niveau des magasins (17).

Ce faisant, lors de la mise en place de ce premier élément de fixation sur le piquet, les magasins (17) sont situés de part et d'autre d'une rangée de vigne et, en fonction des besoins, le filet qu'ils stockent sous forme repliée peut être déplié, puis, après passage de l'épisode orageux ou de la grêle, replié, et ainsi, redécouvrir la végétation aux fins de favoriser sa pousse.

En raison de l'écartement ainsi généré, écartement rendu possible par la caractéristique du matériau constitutif du fil, on définit le volume nécessaire au développement de la végétation, en l'espèce de la vigne.

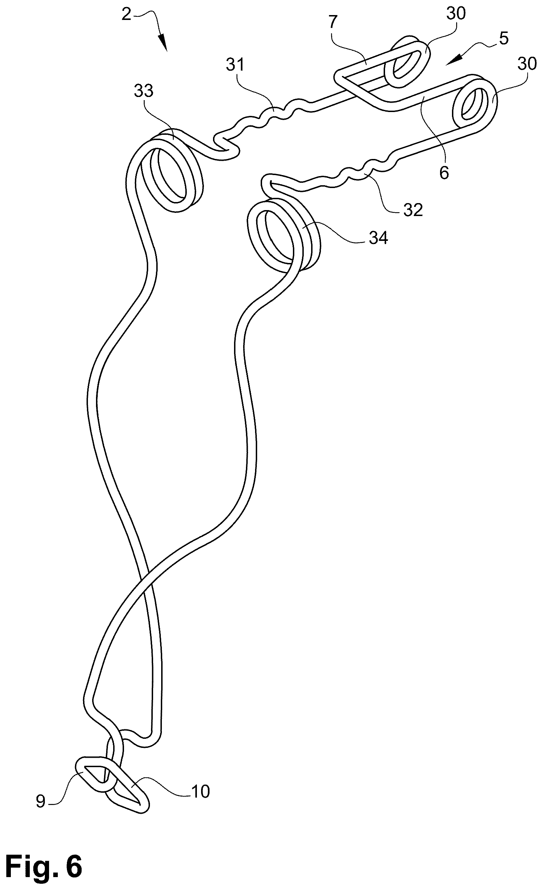

La figure 6 représente encore une autre variante dudit premier élément. Dans cette variante, la forme trapézoïdale de la boucle est remplacée par une forme rectangulaire. Les côtés divergents (7, 8) depuis le côté non clos (5) se prolongent tout d'abord par un enroulement (30) du fil constitutif de l'élément sur lui-même, afin d'optimiser l'effet ressort, puis par une série de zig-zags (31, 32), permettant l'adaptation du dispositif de l'invention à toute section d'un piquet. Les extrémités de ces zones en zig-zags (31, 32) se prolongent alors par un nouvel enroulement du fil sur lui-même (33, 34), afin d'accentuer l'effet ressort. Enfin, et dans l'exemple d'écrit, ces deux enroulements se prolongent par deux branches, faisant fonction d'écarteurs, ainsi que décrit en lien avec la figure 4.

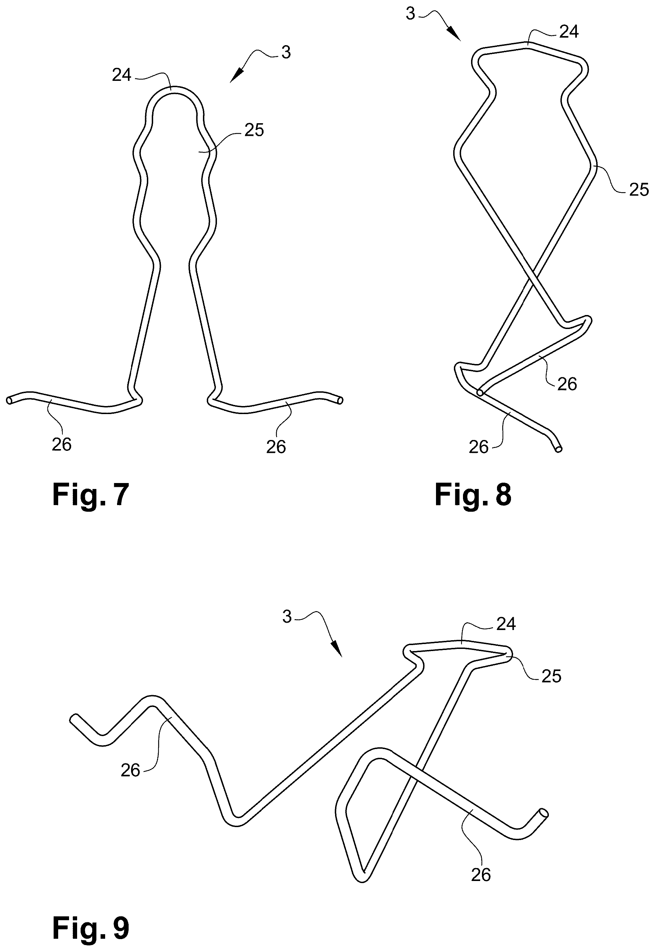

Selon l'invention, ce premier élément, quel que soit son mode de réalisation, est susceptible de coopérer avec un étrier de serrage (3) représenté schématiquement au sein des figures 7, 8, 9 et 10.

Ces étriers de serrage sont également constitués d'un fil métallique unique cambré, à l'instar dudit premier élément. Ce fil est conformé pour définir au moins, selon un premier mode de réalisation, trois plans :
- un premier plan sensiblement vertical dans lequel s'étend la boucle (24) dudit fil ; et
- deux plans, par exemple parallèles l'un à l'autre (figures 7 et 9) ou non parallèles l'un à l'autre (figure 8) ces différents seconds plans étant sensiblement perpendiculaires au plan vertical dans lequel s'inscrit la boucle de ces étriers de serrage et sont donc sécants avec ce dernier.

Ces étriers de serrage comportent au moins deux renflements (25), destinés à coopérer avec ledit premier élément, tel qu'on peut notamment l'observer sur la figure 1 ou sur la figure 2. De fait, ils optimisent le serrage dudit premier élément sur le piquet (1). Afin, en outre, de sécuriser encore davantage ce serrage, les extrémités libres (26) de ces étriers de serrage ont vocation, en raison du plan dans lequel elles se situent, à se boucler au niveau de la face postérieure du piquet (1), tel qu'on peut l'observer notamment sur les figures 1 et 2.

Ce faisant, on assure une fixation extrêmement efficace de ce dispositif de maintien et de positionnement de ces crochets sur les piquets, susceptibles d'assurer une fixation effective et pérenne, par exemple de filets de protection, quelles que soient les intempéries dont les filets ont vocation à réduire les conséquences, y compris en condition de vent important.

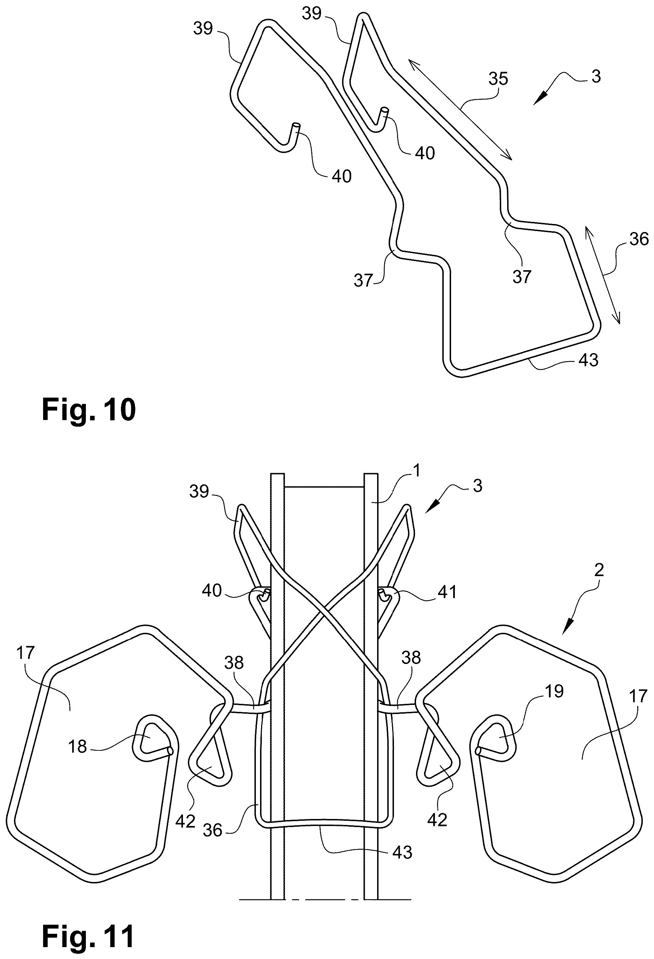

Selon un second mode de réalisation, tel qu'illustré au sein de la figure 10, le fil métallique unique cambré constitutif de l'étrier de serrage (3) est conformé pour définir deux plans sécants l'un par rapport à l'autre :
- un plan dit intermédiaire (35) , ayant vocation à s'étendre sensiblement parallèlement au piquet de vigne lorsqu'il est en place et coopère avec ledit premier élément (2) ;
- un plan terminal (36), constitué par la boucle du fil unique constitutif dudit étrier de serrage, et orienté en l'absence de contrainte, c'est-à-dire lorsqu'il ne coopère pas avec ledit premier élément (2), selon un angle compris entre 20 et 40 degrés par rapport audit plan intermédiaire (35).

L'angulation ainsi générée confère un effet ressort audit plan terminal (36). En effet, lorsque l'étrier de serrage ainsi constitué est mis en place sur un piquet, en coopération avec le premier élément, le segment (43) extrême dudit plan terminal vient prendre appui contre le piquet (1), et l'opérateur doit forcer contre cette partie de l'étrier de serrage pour finaliser son positionnement sur ledit piquet.

Tel que l'on peut l'observer sur la figure 10, les brins du fil unique reliant les deux plans (35, 36) ainsi définis l'un à l'autre décrivent chacun un renflement (37), symétrique l'un de l'autre, et destinés à coopérer avec ledit premier élément (2) au niveau de zones de jonction (38) entre ledit au moins un quadrilatère de fond et la prolongation du fil unique constitutif dudit premier élément, définissant dans l'exemple décrit un magasin (17) d'un filet de protection.

Les extrémités libres (39) du fil unique constitutif de ce second élément ou étrier de serrage sont recourbées, de telle sorte à venir coopérer avec l'un des angles (41) définis par le quadrilatère intermédiaire ou de fond dudit premier élément.

Dans une alternative non représentée, ces extrémités libres et recourbées peuvent aussi se bloquer derrière le piquet (1) selon le principe illustré au sein des figures 1 et 2.

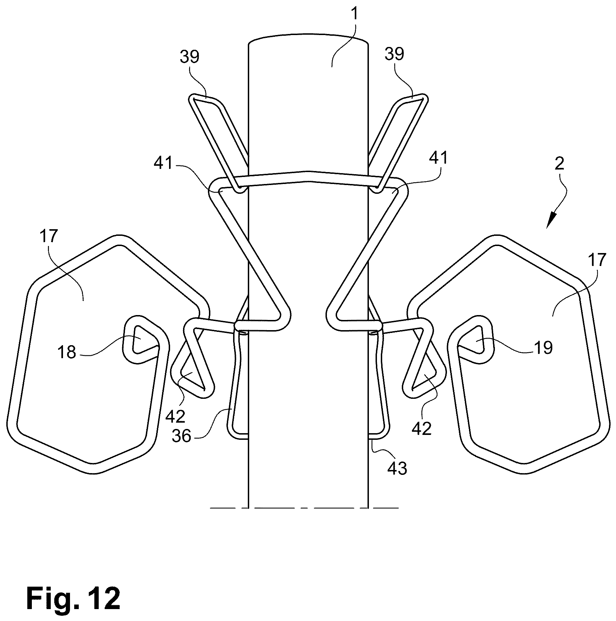

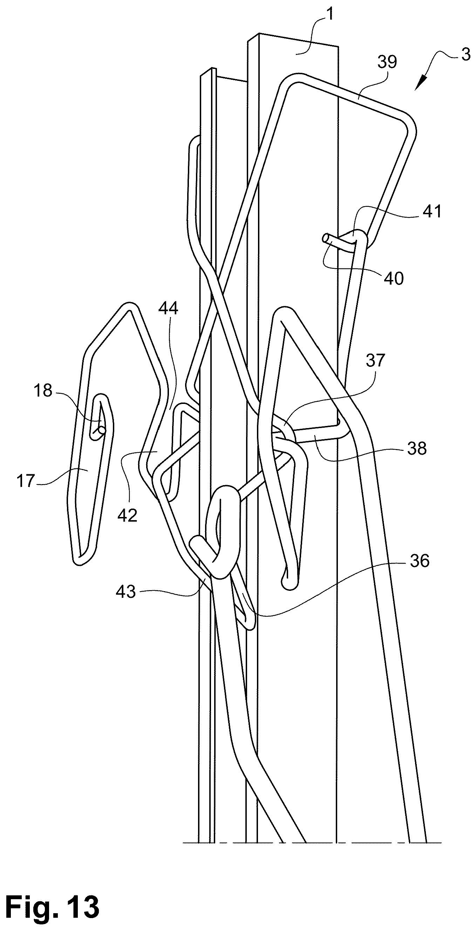

Plus précisément, lorsque lesdits premier et second éléments de cette forme de réalisation sont mis en place sur un piquet, notamment de vigne, et tel que représenté au sein des figures 11 à 13, le plan terminal (36) vient prendre appui contre le piquet au niveau de son segment (43), et en raison de la forme initiale qui lui a été conférée par cambrure (l'angulation par rapport au plan intermédiaire (35), il exerce une pression contre ledit piquet, apte à optimiser la fixation effective du premier élément (2) sur le piquet en question.

Par ailleurs, les brins de fil constitutifs du plan intermédiaire (35) sont croisés lors de sa mise en place sur le piquet, là encore, en vue d'optimiser la fixation du premier élément sur ledit piquet.

Et pour encore sécuriser davantage cette fixation, les extrémités libres recourbées (39) du fil constitutif passent sur la face postérieure du piquet pour venir s'accrocher au niveau des deux angles (41) du quadrilatère intermédiaire dudit premier élément ou derrière le piquet lui-même.

Au sein des figures 11 à 13, le premier élément (2) présente au moins une, et en l'espèce deux boucles faiblement ouvertes (42), définies par le fil cambré qui le constitue. Ces boucles (42) ont vocation à recevoir l'un des fils ou câble de tension d'un filet de protection, lors de la pose de ce dernier, évitant tout décrochage intempestif lors des différentes manipulations de relevage et de récolte.

L'écartement (44) défini par l'ouverture de ces boucles (42) est réduit, et en l'espèce limité à quelques millimètres. Cet écartement est suffisant pour permettre l'introduction du câble ou fil de tension du filet, mais suffisamment réduit pour éviter que le dit fil ou câble ne ressorte de son logement de manière intempestive.

On conçoit de fait la grande facilité de mise en place de ces différents éléments de fixation et de verrouillage, limitant de manière drastique le temps considérable perdu avec les dispositifs de l'art antérieur.

Par ailleurs, en raison des caractéristiques élastiques de déformation, notamment desdits premiers éléments, on conçoit qu'il devient inutile de disposer de toute une panoplie de ces éléments, puisqu'aussi bien, ces éléments peuvent être adaptés à tout type de piquet, quelle qu'en soit la forme ou les dimensions de leur section.

Typiquement, les éléments de l'invention sont adaptables à des piquets de section transversale de 30 x 30 millimètres à 45 x 65 millimètres. Cela permet d'éviter toute rupture de stock et, en outre, de réduire de manière assez considérable les coûts correspondants.

## Revendications

1. Dispositif de maintien et de positionnement sur un piquet (1), pour la culture d'une végétation, d'un filet de protection ou de toute autre accessoire de culture de type bâche, film, tube ou tuyau d'irrigation, ou de dispositif de traitement ou de répulsif contre les insectes, comprenant un premier élément (2) de fixation dudit dispositif sur le piquet (1),
***caractérisé en ce que*** ledit élément (2) est constitué d'un fil métallique cambré unique, définissant au moins un quadrilatère (5-8), typiquement en forme de trapèze ou de rectangle, dont l'un des côtés (5) n'est pas clos, et dont les deux côtés (6, 7) divergents depuis le côté non clos (5) confèrent une capacité de déformation audit premier élément, et dont les deux extrémités libres (9, 10, 17, 18, 19) du fil constitutif dudit élément sont destinées à recevoir le filet de protection et/ou un accessoire de culture, ledit quadrilatère (5 - 8) étant situé contre la face postérieure du piquet (1).

2. Dispositif de maintien et de positionnement sur un piquet (1), selon la revendication 1, ***caractérisé en ce qu'il*** comprend en outre un second élément (3), également constitué d'un fil métallique cambré unique, ce second élément, dit étrier de serrage, coopérant avec ledit premier élément (2) aux fins d'optimiser le verrouillage dudit premier élément sur le piquet.

3. Dispositif de maintien et de positionnement sur un piquet (1), selon la revendication 2*, **caractérisé en ce que*** le fil constitutif de l'étrier de serrage (3) comprend trois plans :
▪ un premier plan définissant au moins deux renflements (25) symétriques l'un de l'autre, destinés à coopérer avec ledit premier élément (2) afin d'assurer le verrouillage de ce dernier sur le piquet (1); et
▪ un second et un troisième plans, sécants avec ledit premier plan, et comportant les deux extrémités libres (26) du fil constitutif de l'étrier, lesdites extrémités étant destinées à enserrer le piquet (1).

4. Dispositif de maintien et de positionnement sur un piquet selon l'une des revendications 1 à 3, ***caractérisé en ce que*** le premier élément (2) ne comporte pas un, mais trois quadrilatères, dont chacun d'entre eux présente un côté non clos, lesdits quadrilatères s'étendant selon trois plans distincts sensiblement perpendiculaires deux à deux.

5. Dispositif de maintien et de positionnement sur un piquet selon la revendication 4, ***caractérisé en ce que*** les quadrilatères sont en forme de trapèze.

6. Dispositif de maintien et de positionnement sur un piquet (1), selon la revendication 2*, **caractérisé en ce que*** le fil constitutif de l'étrier de serrage (3) définit essentiellement deux plans sécants l'un par rapport à l'autre :
• un plan intermédiaire (35), ayant vocation à s'étendre sensiblement parallèlement au piquet de vigne lorsqu'il est en place et coopère avec ledit premier élément (2) ;
• un plan terminal (36), constitué par la boucle du fil unique constitutif dudit étrier de serrage, et orienté en l'absence de contrainte, selon un angle compris entre 20 et 40 degrés par rapport audit plan intermédiaire (35) ;
les brins du fil unique reliant l'un à l'autre les deux plans (35, 36) ainsi définis décrivant chacun un renflement (37), symétrique l'un de l'autre, et destinés à coopérer avec ledit premier élément (2) au niveau de zones de jonction (38) entre ledit au moins un quadrilatère (5 - 8) et les extrémités libres du fil constitutif dudit premier élément.

7. Dispositif de maintien et de positionnement sur un piquet (1), selon la revendication 6*, **caractérisé en ce que*** les extrémités libres (39) du fil unique constitutif du second élément ou étrier de serrage (3) sont recourbées, de telle sorte à venir coopérer avec l'un des angles (41) définis par ledit au moins quadrilatère dudit premier élément (2).

8. Dispositif de maintien et de positionnement sur un piquet (1), selon la revendication 6, ***caractérisé en ce que*** les extrémités libres (39) du fil unique constitutif du second élément ou étrier de serrage (3) sont recourbées, de telle sorte à venir coopérer avec le piquet (1).

9. Dispositif de maintien et de positionnement sur un piquet selon l'une des revendications 1 à 3 et 6 à 8, ***caractérisé en ce que*** le premier élément (2) comprend un quadrilatère, dont les côtés divergents (6, 7) depuis le côté non clos (5) se prolongent par une série de zig-zags (31, 32).

10. Dispositif de maintien et de positionnement sur un piquet selon la revendication 9, ***caractérisé en ce que*** les côtés divergents (7, 8) depuis le côté non clos (5) se prolongent tout d'abord par un enroulement (30) du fil constitutif de l'élément (2) sur lui-même, afin d'optimiser l'effet ressort, puis par une série de zig-zags (31, 32), permettant l'adaptation du dispositif de l'invention à toute section d'un piquet, les extrémités de ces zones en zig-zags (31, 32) se prolongeant alors par un nouvel enroulement du fil sur lui-même (33, 34), afin d'accentuer l'effet ressort.

11. Dispositif de maintien et de positionnement sur un piquet selon l'une des revendications 1 à 8, ***caractérisé en ce que*** le premier élément (2) comprend au moins une boucle faiblement ouverte (42) positionnée entre lesdites extrémités libres du fil constitutif dudit premier élément et la prolongation du côté non clos (5) dudit au moins un quadrilatère.

12. Dispositif de maintien et de positionnement sur un piquet selon la revendication 10, ***caractérisé en ce que*** l'écartement de l'ouverture (44) de ladite au moins une boucle (42) est limité à quelques millimètres, typiquement 2 à 6 millimètres.

13. Dispositif de maintien et de positionnement sur un piquet selon l'une des revendications 1 à 12*, **caractérisé en ce que*** les extrémités libres du premier élément (2) définissent un magasin de stockage (17) du filet, de la bâche, ou d'un voile, typiquement plastique, magasin au niveau duquel ledit filet, bâche, ou voile est susceptible d'être replié sous forme de rouleau.

14. Dispositif de maintien et de positionnement sur un piquet selon l'une des revendications 1 à 12 ***caractérisé en ce que*** les extrémités libres du premier élément (2) définissent un réceptacle (18) d'un fil de tension et de fixation du filet, ce fil s'étendant parallèlement au rang de culture à protéger.

15. Dispositif de maintien et de positionnement sur un piquet selon l'une des revendications 1 à 12*, **caractérisé en ce que*** les extrémités libres du premier élément (2) sont configurées pour faire fonction d'écarteur.

16. Dispositif de maintien et de positionnement sur un piquet selon l'une des revendications 1 à 15, ***caractérisé en ce que*** la section du fil métallique constitutif du premier élément (2), voire du second élément (3) est comprise entre 1 et 5 mm, avantageusement entre 2 et 4 mm.
